# EUROPEAN PATENT SPECIFICATION

(11) **EP 1 313 267 B1**
(45) Date of publication and mention of the grant of the patent: **27.12.2006**
(21) Application number: 01402964.9
(22) Date of filing: 19.11.2001
(51) Int. Cl.: H04L 12/56

(54) **Method for optimising path selection in packet switched networks**
Verfahren zur Optimierung der Wegeauswahl in einem Paketnetz
Méthode pour optimiser la sélection d'une route dans un réseau de transmission par paquets

(43) Date of publication of application: 21.05.2003
(73) Proprietor: MOTOROLA, INC., Schaumburg, IL 60196 (US)
(72) Inventor: Burg, Bernard Joseph, Menlo Park, CA 94025 (US); Taib, Ronnie Bernard Francis, 13010 Marseille (FR); Boscovis, Dragan, 78450 Chavenay (FR)
(74) Representative: Cross, Rupert Edward Blount

(56) References cited:
- DI CARO G ET AL: "Mobile agents for adaptive routing" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, 6 January 1998 (1998-01-06), pages 74-83, XP010262770 ISBN: 0-8186-8255-8
- ZHANG SUBING ET AL: "A QoS routing algorithm based on ant algorithm" ICC 2001. IEEE INTERNATIONAL CONFERENCE ON COMMUNICATIONS. CONFERENCE RECORD (CAT. NO.01CH37240), PROCEEDINGS OF INTERNATIONAL CONFERENCE ON COMMUNICATIONS, HELSINKI, FINLAND, 11-14 JUNE 2001, pages 1581-1585 vol.5, XP002198986 2001, Piscataway, NJ, USA, IEEE, USA ISBN: 0-7803-7097-1

## Description

This invention relates to packet switched networks and particularly to a method for enabling a data packet to choose its own route through a network whilst meeting certain transmission constraints.

A data packet launched from a source towards its final destination is required to navigate through a plurality of nodes which are interconnected by communications links, such nodes and links forming the network.

Such a network may be required to carry data packets comprising voice, video, E-Mail messages, etc between terminals such as mobile telephones, personal computers, servers and the like.

A node may comprise one or more ports, each providing an access point for supporting interfaces between the network and user terminals. A node may also include a router for routing incoming data packets onward via other nodes to their final destinations.

The communications links may comprise cables, optical fibres or radio links, for example.

One problem encountered with the management of packet switched networks is that the path of a packet from source to destination is not always optimal (in terms of the delays incurred or the desired quality of service, for example). One solution to this problem proposed in EP-A-1009131 is provided by dividing the network into a backbone network and a plurality of access sub-networks. This allows a reduction in topology searches to three sub-networks at the most when trying to connect two nodes. However, no intelligence is incorporated into a packet which allows a packet itself to choose an optimum path.

Disclosed in Communications Technology Proceedings 2000, WCC-ICCT 2000, International Conference, pages 849 to 825, Volume 1 "A New Dynamic Distributed Routing Algorithm on Telecommunications Networks" by Li et al is a routing scheme enabled by launching agents from nodes and allowing them to navigate their way across a telecommunications network.

Agents are independent pieces of mobile software code, dispatched from a source node, which roam across a network from node to node until they have accomplished a particular task. Agents may meet each other at an agent meeting place in order to merge or share information. Some of the concepts of agents and agent meeting places are described in IEEE Personal Communications, October 1995, pages 34 to 49 "Itinerant Agents for Mobile Computing" by D. Chess et al.

Referring again to the above communications technology proceedings paper, agents explore the network in a quasi-random way moving from node to node towards a final destination. If an agent successfully reaches its destination, then pheromone tables located in nodes that the agent visited en route, are updated.

The concept of using a pheromone process in route planning has been inspired by studies of the behaviour of animals. A pheromone is a chemical substance secreted externally by certain animals which affects the behaviour of others of the same species. Ants in particular use pheromones to mark out the shortest route from their nest to a supply of food. Ants leave pheromone trails while travelling and also follow trails left by preceding ants as a function of their strength. Several ants leaving a nest in search of food may opt for different routes. When ants who find the shortest path have arrived at the food source, the others are still trying out other routes. So ants travelling on the return journey are more likely to choose the short route because the pheromone concentration will be higher. Hence, pheromone levels on this route will be reinforced again. The existing pheromone on the longer routes eventually evaporates over time.

The use of software agents in a pheromone infrastructure is known from Multi-Agent Proceedings 2000 International Conference, pages 369 to 370 "An Analytic Approach to Pheromone-Based Co-ordination" by S. Brueckner. Therein is disclosed a mechanism whereby agents deposit "pheromones" at discrete locations and perceive the concentration of such pheromones. A "pheromone type" is a specification of a software object and each type specifies two parameters: viz. a propagation factor and an evaporation factor.

Returning to the previously stated problem of determining an optimum route for a data packet, the aforementioned Communications Technology Proceedings Paper proposes one solution whereby traditional routing tables (at each node) are replaced with pheromone tables. These tables are updated according to the length of paths and amount of data traffic on the links. Each table is a set of probabilities which influence a selection of the next node en route to a destination. Probability values are changed depending upon the length of the path that an agent travels and the amount of traffic (payload) on the links traversed en route to its destination. One disadvantage with this solution is that the agents, as they move around the network, take up network capacity that could be more gainfully deployed in the delivery of data packets.

According to the present invention, a method for optimising path selection in a packet switched network adapted to support transmission of a data packet from a source terminal to a destination terminal via at least one network node, the transmission having associated therewith a pre-defined transmission criterion, is characterised by the steps of:
(a) encapsulating a data packet in an autonomous and mobile entity,
(b) transmitting the encapsulated data packet from a source terminal towards a destination terminal via at least one network node,
(c) at each network node visited, leaving a marker and an indication of the destination terminal, -
(d) receiving the transmitted encapsulated data packet at the destination terminal,
(e) registering the degree to which the transmission has met the pre-defined transmission criterion,
(f) sending an acknowledgement message from the destination terminal to the source terminal via at least one network node,
(g) at each network node visited by the acknowledgement message and also being a network node previously visited by said data packet, modifying the marker in accordance with the degree to which the transmission met the transmission criterion.

As the packet has now been given some intelligence, by means of the encapsulation step, the invention allows a way for a transmitted data packet to map out optimum routes in a network whilst it is being delivered to its ultimate destination.

The invention also allows a following data packet to choose a best compromise between delivery time and payload.

The acknowledgement message provides some feedback confirming, or otherwise, that the outbound route met the desired transmission criterion.

Such transmission criterion may be a desired cost, speed of delivery (delay time) or some other quality of service measure, for example. Hence, following packets can make informed decisions on the best route for themselves to pick (from node to node) by taking note of the markers (i.e. pheromones) left behind by previous encapsulated packets and of a confidence level given to the markers by the acknowledgement message. Also, following the packets may leave their own markers at each node, thus re-enforcing the pheromone effect at particular nodes.

Preferably, a marker has a finite lifetime and a node may be adapted to decrease the confidence level of a marker or to delete it completely after some pre-defined time period. This feature is advantageous in that it enables the invention to adapt to external changes which may be made to the network.

In one embodiment, in addition to leaving an indication of the final destination of a transmitted data packet, there is included the additional step of leaving an indication of the next network node to be visited.

In a further embodiment, there is included the further step of leaving, at a visited network node (on the outbound trip), an indication of the pre-defined transmission criterion.

A visited node may maintain a table of markers and indications left by visiting data packets. Such a table may also contain the identities (ID) of packets which have left indications of similar transmission criteria. Indicators may be recorded as a destination terminal's identity (ID), a string representing a transmission criterion and the identity (ID) of the next node to be visited.

A node may also be configured to generate a time stamp indicating the time of the last modification used to fade a marker (pheromone) out.

In one embodiment, a marker left at a visited node comprises an integer value set at some initial confidence level equating to a pheromone attraction power. When a subsequent packet arrives at the node and takes the same decision as its predecessor, it updates the time stamp and increases the confidence level of the existing marker (by + 1, for example).

When an acknowledgment message returns and confirms the original marker left on the outward journey, it does so by increasing the confidence level by a larger amount (+ 10, say if the transmission criterion is met or + 100 say, if the transmission criterion was exceeded). On the other hand, if the transmission criterion was not met, then the confidence level is decreased accordingly. The acknowledgement message retrieves its previous marker from a marker table incorporated in a node by using its packet identity (ID).

Preferably, software agent technology is employed for the encapsulation of the data packet.

The acknowledgement message may comprise an encapsulated data packet or just an agent. The acknowledgement message may take the same route back to the source or may explore other routes. It may choose to take a different route because of different quality of service requirements. For example, the original data packet may have been sent to its destination via the fastest route whereas an acknowledgement message can be sent via the cheapest route, even if it is a slower one. An acknowledgement message may use the pheromones deposited previously at visited nodes to find the cheapest way back to the source.

Some embodiments of the invention will now be described, by way of example only, with reference to the drawings of which;
Figure 1 is a schematic block diagram of a packet switched network capable of operating in accordance with the invention, and
Figure 2 is a flow diagram of a method in accordance with the invention.

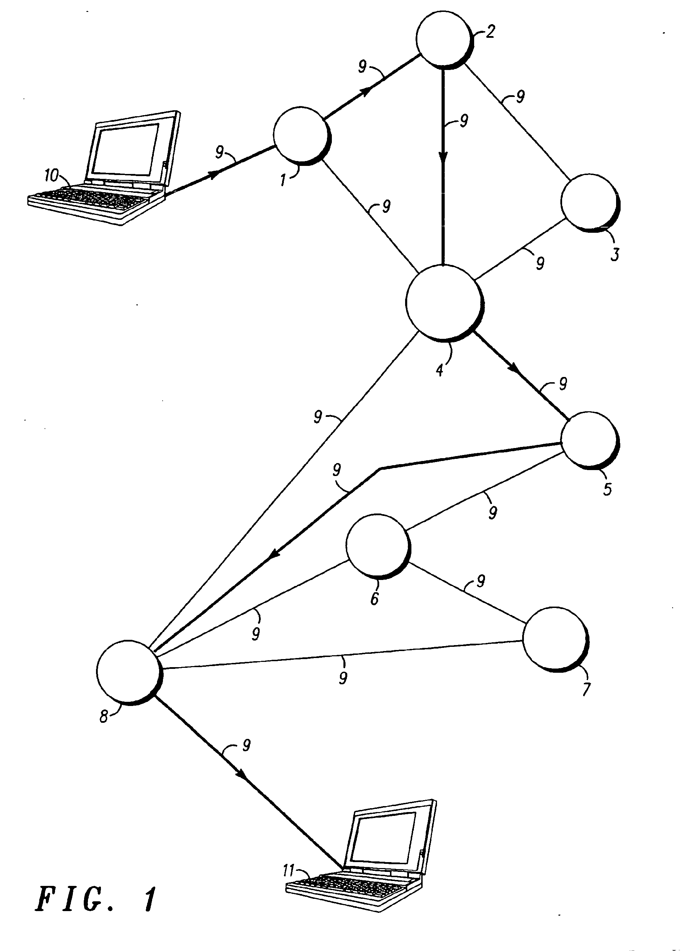

With reference to Figure 1, a packet switched network includes a plurality of nodes 1 to 8 interconnected by communications links 9. A first personal computer terminal 10 has a link to the node 1, and a second personal computer terminal 11 is linked to the node 8. The network is adapted to support transmissions of voice, E-Mail, video, facsimile and the like. It is also configured to support varying desired transmission criteria, for example, speed of delivery, cost. For example, voice transmissions require a fast delivery (with a minimum of time delay between packets), whereas E-Mail messages are supplied at the cheapest rate.

Other terminals (not shown) are connected to the network via similar nodes and links.

Software agent technology is used to encapsulate data packets which move across the network from node to node. When an agent is created, information learnt from encapsulated packets which have previously explored the network are loaded into it.

In this example, the first personal computer terminal 10 is considered to be the source and wishes to send an E-Mail message (as a sequence of one or more data packets) to the second personal computer terminal 11, which is the ultimate destination. It is required to send the E-Mail message via a route having a cost below some pre-defined threshold.

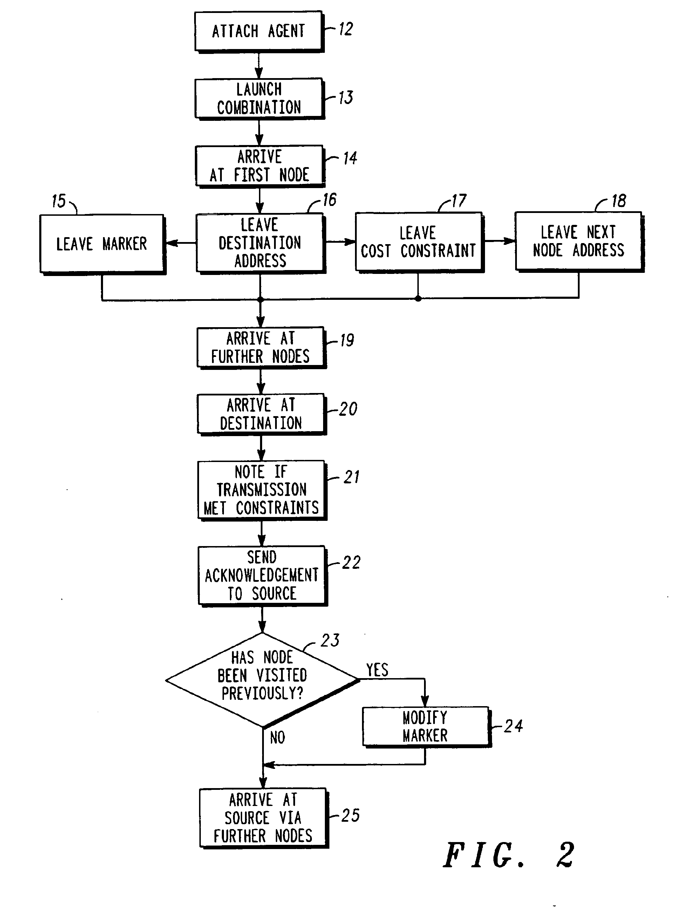

With reference to Figure 2, a data packet generated by the personal computer terminal 10 is encapsulated by attaching a mobile software agent at step 12. At step 13, the agent/packet combination is launched into the network and arrives at a first node 1 (step 14) on route to its destination 11.

On arrival at each node, the packet/agent combination makes a decision as to which route to take next and shares this decision with following packets by leaving pheromones at each node visited. Pheromones impart information such as "I passed through this node A, my destination target was T, my strategy is to find the cheapest way, I have chosen to go through node B next". So in the example of Figure 2, when the packet agent/combination reaches node 1, it leaves a pheromone (marker) at step 15 recording that it visited this node. It also leaves indications of its destination address (step 16), its cost constraint (step 16) and the address of the next node that it is heading for (step 18).

The packet/agent combination continues further via nodes 2, 4, 5 and 8 (step 19) leaving similar pheromones until it arrives at the destination personal computer terminal 11 (step 20).

As the packet arrives at the destination terminal, the associated agent notes whether or not the transmission met the original cost constraint (step 21). An acknowledgement message comprising the agent is now sent back to the source (step 22). If the return route includes nodes visited on the outward journey (namely nodes 1, 2, 4, 5 and 8), then the agent can modify the pheromone that it left there previously. On arriving at a node (on the return journey) and the agent detects that this particular node has been previously visited (step 23) then the agent increases the confidence level of the pheromone (if the outward journey was accomplished satisfactorily, otherwise the confidence level is diminished) (step 24). The acknowledgement message continues to progress through the network via a sequence of nodes (step 25), modifying the pheromones accordingly until it reaches the source.

Each of the nodes 1 to 8 in Figure 1 is provided with the means to maintain a table of pheromones left by a visiting packet/agent combination. Each node is further configured to delete pheromones whose confidence levels fall below a preset threshold.

By virtue of the pheromones and their confidence levels, future packets navigating the network between a source and a destination are guided through the optimum route for their desired delay, quality of service, cost constraints, etc. They also leave more pheromones as they go, which are modified accordingly by their acknowledgement messages on the return journey, thereby providing more and more useful guidance for subsequent packets.

There are now a variety of pheromones at a node, giving indications of the expected load for all links emanating from a node. For example, pheromones associated with the links from nodes 8 to 6 and from nodes 8 to 7 show these links as fast but expensive routes to a first target. The pheromone associated with the link from node 8 to 5 shows a longer but cheaper link to a different second target source. Another link from node 8 to 4 is not tagged by any pheromone. As pheromones at a node give information on the usage of a link to reach a given target, two pheromones on the same node can make different statements for the same link. So a second pheromone associated with the link from node 8 to 6 might indicate that the link is a longer but cheaper one to a third target source. Hence, the agent associated with an outgoing packet or comprising an acknowledgement message may be configured to follow one of several strategies, i.e. take a known fast route, 8 to 6 or 8 to 7, a known cheap route 8 to 5 to its designated target or to investigate a completely unknown link from node 8 to 4.

In a further embodiment, as the agents attached to the various data packets move through the network from node to node, they gather information regarding the characteristics of the network.

Network analysis and reasoning algorithms are implemented in an agent so that it can extract these characteristics and record them for future use. The recorded characteristics can be sent back to the source in an agent.

In this embodiment, several agents associated with different data packets feed all the information which they have individually gathered on network characteristics into a single agent before returning it to a source. This merging of information occurs in this preferred embodiment at an agent meeting place. Merging of the information saves bandwidth and cost. Such agent meeting places may be designated by the source sending the agent over the network. Advantageously, a designated agent meeting place may be one close to several destinations to which packets launched by the same source are heading. In order to statistically increase the chances of meeting at the agent meeting places, the agents are adapted to spend a given period of time at each agent meeting place, provided that the information or messages that they are carrying are not urgent.

In the case where several agents are delivering their associated packets across the network of Figure 1 to and from various sources and destinations, they follow different paths and learn various network characteristics from the nodes they visit. Eventually, this leads to a collection of views of various parts of the network. Each agent learns characteristics available at each node such as the number of adjacent nodes available and the quality of service and payload of each link reaching them.

Further, on the outward journey, an agent has gathered network information whilst on route relating to pay load, cost, quality of service, etc and has retained this information. This useful information can be loaded into agents associated with subsequent packets. An algorithm for route optimisation can be then be implemented in an agent at its creation and used to guide data packets associated therewith to their destinations.

## Claims

1. A method for optimising path selection in a packet switched network adapted to support transmission of a data packet from a source terminal (10) to a destination terminal (11) via at least one network node (1-8), the transmission having associated therewith a pre-defined transmission criterion, the method being **characterised by** the steps of;
(a) encapsulating a data packet in an autonomous and mobile entity,
(b) transmitting (13) the encapsulated data packet from a source terminal (10) towards a destination terminal (11) via at least one network node (1-8),
(c) at each network node (1-8) visited, leaving (15) a marker and an indication (16) of the destination terminal (11),
(d) receiving (20) the transmitted encapsulated data packet at the destination terminal (11),
(e) registering (21) the degree to which the transmission has met the pre-defined transmission criterion,
(f) sending (22) an acknowledgement message from the destination terminal (11) to the source terminal (10) via at least one network node (1-8),
(g) at each network (1-8) node visited by the acknowledgement message and also being a network node (1-8) previously visited by said encapsulated data packet, modifying (24) the marker in accordance with the degree to which the transmission met the transmission criterion.

2. A method according to Claim 1 in which step (c) further includes leaving (18) an indication of the next network node (1-8) to be visited.

3. A method according to Claim 1 or Claim 2 in which step (c) further includes leaving (17) an indication of the pre-defined transmission criterion.

4. A method according to any preceding Claim and including the further step of maintaining, in a network node (1-8), a table of markers left by visiting packets and the identities of said visiting packets.

5. A method according to Claim 4 including the further step of recording in the table, identities of one or more destination terminals (11) and of the next network node (1-8) to be visited by a visiting data packet.

6. A method according to any preceding Claim further including first step of, in a network node (1-8), deleting a marker once it has been modified beyond a pre-defined threshold.

7. A method according to any preceding Claim in which the step (a) of encapsulating (12) comprises associating a software agent with the data packet.

8. A method according to Claim 7 including the further step of gathering information relating to network characteristics in an agent associated with a data packet as it traverses the network between a source terminal (10) and a destination terminal (11).

9. A method according to Claim 8 including the further steps of instructing an agent associated with a data packet to meet other agents associated with other data packets at an agent meeting place and to merge gathered information relating to network characteristics,
and returning said merged information to a source terminal (10) by means of a designated agent.

10. A method according to any of Claims 7 to 9 including the further step of incorporating network characteristics gathered by an agent associated with a preceding data packet into a succeeding encapsulated data packet.

## Patentansprüche

1. Verfahren zur Optimierung einer Wegeauswahl in einem Paketvermittlungsnetz, welches zur Unterstützung der Vermittlung eines Datenpakets von einem Ursprungsanschluss (10) an einen Zielanschluss (11) über mindestens einen Netzknoten (1-8) ausgelegt ist, wobei die Vermittlung oder Übertragung mit einem vordefinierten Übertragungskriterium verbunden ist, wobei das Verfahren durch die folgenden Schritte **gekennzeichnet** ist:
(a) Einkapselung eines Datenpakets in eine autonome und mobile Entität;
(b) Übertragung (13) des eingekapselten Datenpakets von einem Ursprungsanschluss (10) zu einem Zielanschluss (11) über mindestens einen Netzknoten (1-8);
(c) Zurücklassen (15) eines Markierers und einer Anzeige (16) des Zielanschlusses (11) an jedem besuchten Netzknoten (1-8) ;
(d) Empfang (20) des übertragenen eingekapselten Datenpakets am Zielanschluss (11);
(e) Registrierung (21) des Grades, mit welchem die Übertragung das vordefinierte Übertragungskriterium erfüllt;
(f) Senden (22) einer Bestätigungsnachricht vom Zielanschluss (11) an den Ursprungsanschluss (10) über mindestens einen Netzknoten (1-8);
(g) Modifikation (24) des Markierers entsprechend dem Grad der Erfüllung des Übertragungskriteriums durch die Übertragung an jedem von der Bestätigungsnachricht besuchten Netzknoten (1-8), bei welchem es sich zudem um einen Netzknoten (1-8) handelt, der zuvor von dem eingekapselten Datenpaket besucht worden ist.

2. Verfahren nach Anspruch 1, bei welchem Schritt (c) weiter den Schritt des Zurücklassens (18) einer Angabe über den nächsten zu besuchenden Netzknoten (1-8) einschließt.

3. Verfahren nach Anspruch 1 oder 2, bei welchem Schritt (c) weiter den Schritt des Zurücklassens (17) einer Angabe über das vordefinierte Übertragungskriterium aufweist.

4. Verfahren nach einem der vorhergehenden Ansprüche, welches weiter den Schritt der Aufrechterhaltung einer Tabelle von Markierern, die von Besuchspaketen zurückgelassen wurden, und der Kennungen dieser Besuchspakete in einem Netzknoten (1-8) aufweist.

5. Verfahren nach Anspruch 4, welches weiter den Schritt der Aufzeichnung der Kennungen eines oder mehrerer Zielanschlüsse (11) und des nächsten Netzknotens (1-8), der von einem Besuchs-Datenpaket besucht werden soll, in der Tabelle aufweist.

6. Verfahren nach einem der vorhergehenden Ansprüche, welches weiter die Löschung eines Markierers in einem Netzknoten (1-8) aufweist, sobald dieser über eine vordefinierte Schwelle hinaus abgeändert worden ist.

7. Verfahren nach einem der vorhergehenden Ansprüche, bei welchem der Schritt (a) der Einkapselung (12) den Schritt des Zuordnens eines Software-Agenten zu dem Datenpaket aufweist.

8. Verfahren nach Anspruch 7, welches weiter den Schritt des Sammelns von Informationen bezüglich Netzwerkeigenschaften in einem Agenten, welcher einem Datenpaket zugeordnet ist, aufweist, wenn dieser das Netz zwischen einem Ursprungsanschluss (10) und einem Zielanschluss (11) durchquert.

9. Verfahren nach Anspruch 8, welches weiter den Schritt der Befehlserteilung an einen Agenten, der einem Datenpaket zugeordnet ist, aufweist, andere Agenten, welche anderen Datenpaketen zugeordnet sind, an einem Agenten-Treffpunkt zu treffen, und gesammelte Informationen bezüglich der Netzwerkeigenschaften zusammenzulegen oder abzugleichen, und
den Schritt der Rückgabe der zusammengelegten oder abgeglichenen Informationen an einen Ursprungsanschluss (10) mit Hilfe eines designierten oder dazu bestimmten Agenten.

10. Verfahren nach einem der Ansprüche 7 bis 9, welches weiter den Schritt des Integrierens von Netzwerkeigenschaften, die von einem Agenten gesammelt wurden, der einem vorherigen Datenpaket zugeordnet ist, in ein nachfolgendes eingekapseltes Datenpaket aufweist.

## Revendications

1. Procédé pour optimiser la sélection d'une route dans un réseau de transmission par paquets adapté pour supporter la transmission d'un paquet de données d'un terminal source (10) à un terminal de destination (11) via au moins un noeud de réseau (1-8), la transmission ayant un critère de transmission prédéfini associé à celle-ci, le procédé étant **caractérisé par** les étapes consistant à:.
(a) encapsuler un paquet de données dans une entité autonome et mobile,
(b) transmettre (13) le paquet de données encapsulé d'un terminal source (10) vers un terminal de destination (11) via au moins un noeud de réseau (1-8),
(c) au niveau de chaque noeud de réseau (1-8) visité, laisser (15) un marqueur et une indication (16) du terminal de destination (11),
(d) recevoir (20) le paquet de données encapsulé transmis au niveau du terminal de destination (11),
(e) enregistrer (21) le degré avec lequel la transmission a satisfait le critère de transmission prédéfini,
(f) envoyer (22) un message d'accusé de réception du terminal de destination (11) au terminal source (10) via au moins un noeud de réseau (1-8),
(g) au niveau de chaque noeud de réseau (1-8) visité par le message d'accusé de réception et étant également un noeud de réseau (1-8) visité précédemment par ledit paquet de données encapsulé, modifier (24) le marqueur en fonction du degré avec lequel la transmission a satisfait le critère de transmission.

2. Procédé selon la revendication 1, dans lequel l'étape (c) consiste en outre à laisser (18) une indication du noeud de réseau (1-8) suivant à visiter.

3. Procédé selon la revendication 1 ou 2, dans lequel l'étape (c) consiste en outre à laisser (17) une indication du critère de transmission prédéfini.

4. Procédé selon l'une quelconque des revendications précédentes et comprenant en outre l'étape consistant à maintenir, dans un noeud de réseau (1-8), une table de marqueurs laissés par des paquets visiteurs et les identités desdits paquets visiteurs.

5. Procédé selon la revendication 4, comprenant l'étape ultérieure consistant à enregistrer dans la table des identités d'un ou plusieurs terminaux de destination (11) et du noeud de réseau (1-8) suivant destiné à être visiter par un paquet de données visiteur.

6. Procédé selon l'une quelconque des revendications précédentes, comprenant en outre une première étape consistant à, dans un noeud de réseau (1-8), effacer un marqueur une fois qu'il a été modifié au-delà d'un seuil prédéfini.

7. Procédé selon l'une quelconque des revendications précédentes, dans lequel l'étape (a) d'encapsulation (12) consiste à associer un agent de logiciel au paquet de données.

8. Procédé selon la revendication 7, comprenant l'étape ultérieure consistant à regrouper des informations relatives à des caractéristiques de réseau dans un agent associé au dit paquet de données lorsqu'il traverse le réseau entre un terminal source (10) et un terminal de destination (11).

9. Procédé selon la revendication 8, comprenant les étapes ultérieures consistant à donner instruction à un agent associé à un paquet de données de rencontrer d'autres agents associés à d'autres paquets de données au niveau d'un emplacement de rencontre d'agents et de fusionner les informations regroupées relatives à des caractéristiques de réseau,
et renvoyer lesdites informations fusionnées à un terminal source (10) au moyen d'un agent déterminé.

10. Procédé selon l'une quelconque des revendications 7 à 9, comprenant l'étape ultérieure consistant à incorporer des caractéristiques de réseau regroupées par un agent associé à un paquet de données précédent dans un paquet de données successives encapsulé.
